# EUROPÄISCHE PATENTSCHRIFT

(11) **EP 0 753 657 B1**
(45) Veröffentlichungstag und Bekanntmachung des Hinweises auf die Patenterteilung: **24.03.1999**
(21) Anmeldenummer: 96108995.0
(22) Anmeldetag: 05.06.1996
(51) Int. Cl.: F02M 35/10

(54) **Ansaugluftleitung für einen Verbrennungsmotor**
Intake air manifold for an internal combustion engine
Collecteur d'admission d'air pour un moteur à combustion interne

(30) Priorität: 10.07.1995 DE 19525086
(43) Veröffentlichungstag der Anmeldung: 15.01.1997
(73) Patentinhaber: DAIMLER-BENZ AKTIENGESELLSCHAFT, 70567 Stuttgart (DE)
(72) Erfinder: Weining, Hans Karl, 73730 Esslingen (DE); Wüst, Axel, 73728 Esslingen (DE); Schütz, Berndt, 70327 Stuttgart (DE); Dittrich, Peter, Dr., 70327 Stuttgart (DE); Wagner, Wolf Dieter, 70327 Stuttgart (DE); Höptner, Claus Peter, 73066 Uhingen (DE)

(56) Entgegenhaltungen:
- EP-A- 0 433 923
- DE-A- 4 439 792
- US-A- 2 388 213
- PATENT ABSTRACTS OF JAPAN vol. 7, no. 189 (M-237), 18.August 1983 & JP-A-58 091362 (HINO JIDOSHA KOGYO), 31.Mai 1983,

## Beschreibung

Die Erfindung betrifft eine Ansaugluftleitung für einen Verbrennungsmotor gemäß dem Oberbegriff des Hauptanspruches.

Bei den bisher bekannten Leitungen zur Führung von Gasen, insbesondere bei der Luftführung in einem Verbrennungsmotor mit starken Umlenkungen, entsteht ein ungleichmäßiges Strömungsprofil mit Wirbeln, Totwasserzonen und Rückströmbereichen. Dieses Strömungsprofil führt dazu, daß sich der Strömungsbeiwert erhöht und dadurch der effektive Querschnitt der Luftführung reduziert wird.

Es ist allgemein bekannt (s. Dubbel, Taschenbuch für den Maschinenbau, 17. Auflage S. B 50) Leitschaufeln für Luftführungen vorzusehen. Dabei treten jedoch ebenfalls Strömungsverluste auf.

Eine gattungsgemäße Ansaugluftleitung für einen Verbrennungsmotor ist aus der DE-A-38 43 019 bekannt. Die in der genannten Druckschrift offenbarte Lufteinlaßkammer für einen Gemischbildner eines Kraftfahrzeuges weist ein Umlenkteil mit im Strömungsweg des durch den Gemischbildner geförderten Mediums liegenden Leitschaufeln auf, die wenigstens annähernd der Richtungsänderung des Umlenkteiles angepaßt sind.

In der DE-A-44 39 792 ist ein Lufteinlaßsystem für Verbrennungsmotoren offenbart, welches einen Lufteinlaßabschnitt für die für den Verbrennungsmotor vorgesehene Luft und einen Ansaugrohrabschnitt mit mehreren Ansaugrohren aufweist, die die Luftströmung zu den jeweiligen Brennkammern des Motors leiten, offenbart. Weiterhin sind wenigstens eine erste und eine zweite Luftströmungskammer vorgesehen, die den Lufteinlaßabschnitt mit dem Ansaugrohrabschnitt verbinden, welche nebeneinander angeordnet sind und die von der angesaugten Luft nacheinander durchströmt werden, wobei jede Luftströmungskammer von der benachbarten Luftströmungskammer durch eine gemeinsame Wand getrennt und mit der benachbarten Luftströmungskammer durch eine Öffnung in der gemeinsamen Wand verbunden ist.

Aus der DE-A-40 31 886 ist ein Saugrohr einer Brennkraftmaschine bekannt, welches zur Verbindung eines Ansaugkanals eines Zylinders der Brennkraftmaschine mit einem Sammler oder der Umgebung dient und in dessen Verlauf eine Düse angeordnet ist. Um bei einem solchen Ansaugrohr auch bei kleineren Drehzahlen einen hohen volumetrischen Liefergrad zu erreichen, ist vorgesehen, daß das Saugrohr im Bereich seines dem Sammler oder der Umgebung zugekehrten Endbereiches einen Ansaugtrichter und einen an dessen Einschnürung unmittelbar anschließenden Diffusor aufweist, dessen erweitertes Ende mit dem Einlaß der Düse in Verbindung steht, deren Öffnung dem Flanschdurchmesser des Ansaugkanals des Zylinderkopfes der Brennkraftmaschine entspricht.

Der vorliegenden Erfindung liegt die Aufgabe zugrunde, eine Vorrichtung zu schaffen, mit der eine Luftführung mit optimiertem Strömungsprofil ermöglicht wird.

Erfindungsgemäß wird diese Aufgabe durch die Merkmale des kennzeichnenden Teiles des Hauptanspruches gelöst.

In überraschender Weise wird durch die erfindungsgemäße Aufweitung des Umlenkteiles erreicht, daß es nicht, wie bei den bisher bekannten Luftführungen mit Leitschaufeln, durch diese zu Strömungsverlusten kommt und damit nicht zu einer Reduzierung des effektiven Querschnittes. Durch diese Aufweitung werden die Strömungsverluste, die durch die Leitschaufeln entstehen, korrigiert. Trotz dieser Aufweitungen können die Leitschaufeln problemlos in das Umlenkteil integriert werden, ohne dadurch Strömungsverluste in Kauf nehmen zu müssen.

Da durch die Aufweitung des Umlenkteiles die Leitschaufel oder die Leitschaufeln im allgemeinen nicht auf herkömmliche Weise eingeschoben werden können, ist das Umlenkteil zweiteilig ausgebildet, wobei sich die Leitschaufel über die gesamte Breite des Querschnittes bzw. Strömungsquerschnittes erstreckt.

Durch die erfindungsgemäße Leitschaufelanordnung werden die Strömungsverluste reduziert und der Verbrennungsmotor somit optimal mit der aus dem Luftfilter kommenden Luft versorgt.

Vorteilhafte Weiterbildungen und Ausgestaltungen der Erfindung sind in den weiteren Unteransprüchen beschrieben.

Ein Ausführungsbeispiel der Erfindung ist anhand der Zeichnung beschrieben.

Es zeigt:
- Fig. 1: eine perspektivische Darstellung einer erfindungsgenäßen Ansaugluftleitung mit befestigtem Deckel;
- Fig. 2: eine perspektivische Darstellung der Ansaugluftleitung mit herausgezogenem Deckel.
- Fig. 3: einen Längsschnitt durch das Gehäuse der Ansaugluftleitung;
- Fig. 4: einen Querschnitt durch die Ansaugluftleitung, wobei Leitschaufeln mit dem Gehäuse einstückig sind.

Eine Ansaugluftleitung mit einem Umlenkteil 1 ist im Bereich der Umlenkung mit zwei Leitschaufeln 2 versehen. Die Krümmung der Leitschaufeln 2 ist annähernd der Richtungsänderung des Umlenkteiles 1 angepaßt. Die Leitschaufeln 2 können stromlinienförmig oder mit konstanter Dicke ausgeführt sein.

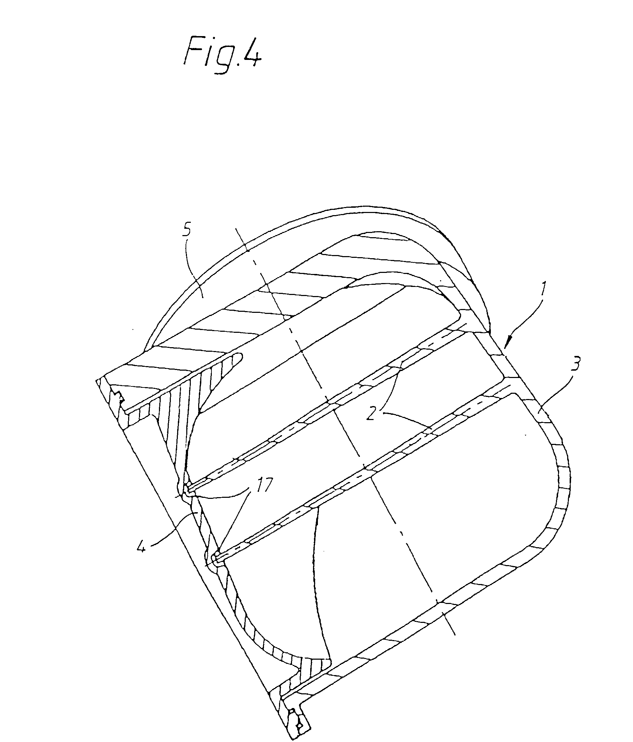

Wie aus der Fig. 4 ersichtlich ist, weist das Umlenkteil 1 eine von der Kreisform abweichende Querschnittsform derart auf, daß das Umlenkteil 1 quer zur Strömungsrichtung aufgeweitet ist. Diese Aufweitung, die in Fig. 4 im unteren Bereich deutlich zu erkennen ist, sorgt für eine weitere Verringerung der Strömungsverluste und verbessert somit das Strömungsprofil. Durch diese Aufweitung wird das Volumen der Leitschaufeln 2 kompensiert und dadurch der effektive Strömungsquerschnitt gleichgehalten bzw. vergrößert.

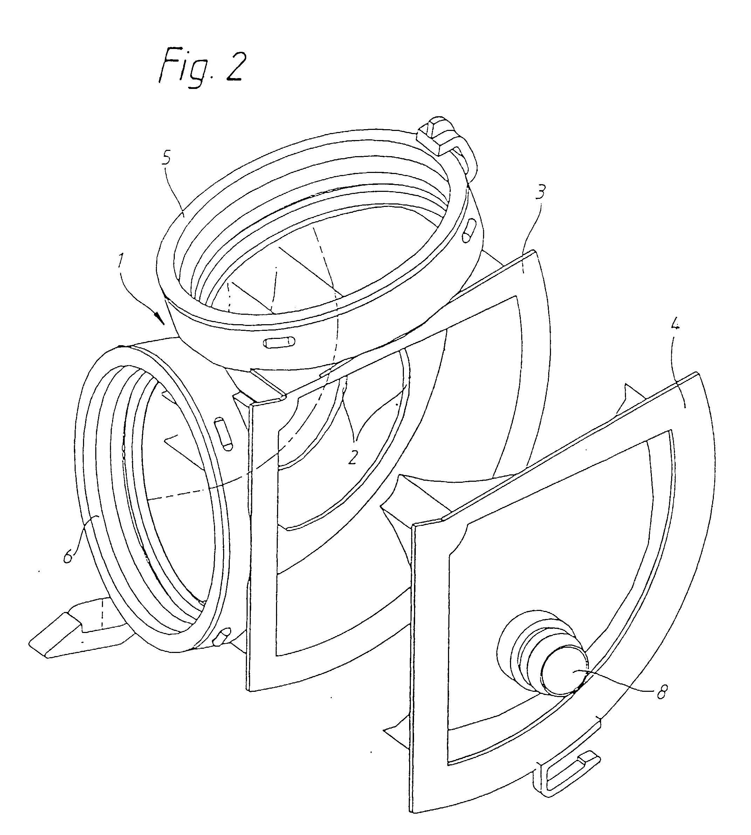

Das Umlenkteil 1 ist zweiteilig ausgebildet. Es besteht aus einem seitlich offenen Gehäuseteil 3 und aus einem die seitliche Öffnung verschließenden Deckel 4. Eine Darstellung des Gehäuseteiles 3 und des Deckels 4 im geöffneten Zustand zeigt Fig. 2. Wie in Fig. 2 ebenfalls ersichtlich, besitzt das seitlich offene Gehäuseteil 3 ein Einlaßteil 5 und ein Auslaßteil 6. Durch das Einlaßteil 5 wird der Luftstrom vom Luftfilter in das Umlenkteil 1 befördert. Nachdem dieser Luftstrom durch das Umlenkteil 1 und die Leitschaufeln 2 umgelenkt worden ist, verläßt er das Umlenkteil 1 durch das Auslaßteil 6 in Richtung Verbrennungsmotor.

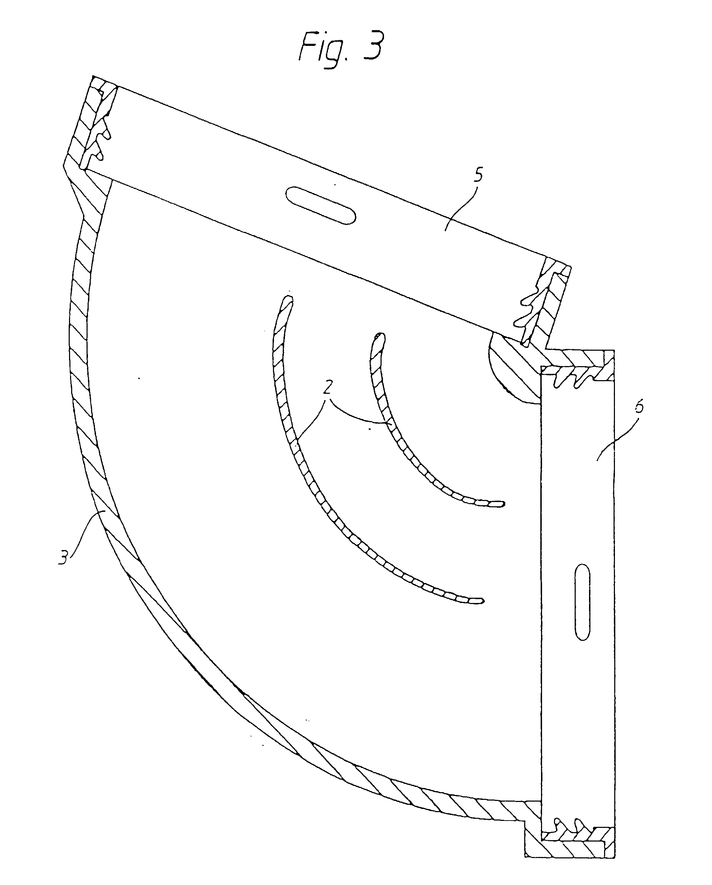

Die Leitschaufeln 2 sind gemäß Fig. 2 an das Gehäuseteil 3 angeformt. Eine Darstellung des Gehäuseteiles 3 mit den Leitschaufeln 2 zeigt Fig. 3. Gemäß Ausgestaltung nach Fig. 4 werden die mit dem Gehäuseteil 3 einstückigen Leitschaufeln 2 in Nuten 17 auf der dem Gehäuseteil 3 zugewandten Seite des Deckels 4 abgestützt. Diese Nuten 17 sind der Dicke der Profilform und dem Verlauf der Leitschaufeln 2 angepaßt. Mit Hilfe der in Fig. 4 dargestellten Nuten 17 werden die Leitschaufeln 2 stabilisiert. Für eine einfache Herstellung des Gehäuses sind die Leitschaufeln 2 an das Gehäuseteil 3 angespritzt oder angegossen.

Das Gehäuseteil 3 ist mit dem Deckel 4 luftdicht verbunden. Diese Luftdichte Verbindung des Gehäuseteiles 3 mit dem Deckel 4 dient ebenfalls einer Optimierung des Strömungsverlaufes. Diese luftdichte Verbindung des Gehäuseteiles 3 und des Deckels 4 kann durch Verschweißen, Verlöten, Verkleben oder Verschrauben erreicht werden.

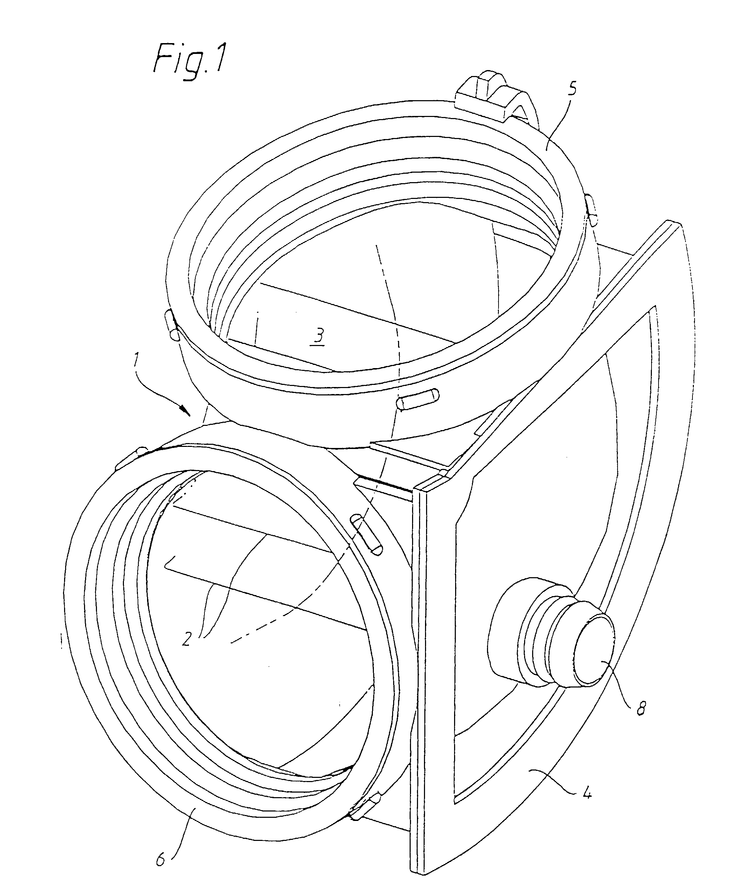

Wie in Fig. 1 und Fig. 2 dargestellt, besitzt der Deckel 4 einen Stutzen 8 für zusätzliche Luftzuführung. Falls es notwendig erscheint, kann also durch diesen Stutzen 8 zusätzliche Luft, z.B. Kurbelgehäuseentlüftung, eingebracht werden.

Dadurch, daß das Umlenkteil 1 aus einem Gehäuseteil 3 und einem Deckel 4 besteht, ist es möglich, das Einlaßteil 5 und das Auslaßteil 6 ohne Grat zu fertigen. Das Einlaßteil 5 und das Auslaßteil 6 sind daher ohne Grat mit dem Gehäuseteil 3 verbunden. Da weder das Einlaßteil 5 noch das Auslaßteil 6 einen Grat aufweisen, erreicht man eine hohe Dichtfunktion, die wiederum zu einem optimalen Strömungsprofil und somit zu geringen Strömungsverlusten führt.

Selbstverständlich ist es auch möglich die Leitschaufeln 2 statt in das Gehäuseteil 3 (siehe Fig. 2 und 4) in den Deckel 4 einzuformen und dann in Nuten im Gehäuseteil 3 abzustützen.

## Patentansprüche

1. Ansaugluftleitung für einen Verbrennungsmotor mit einem Einlaßteil (5) und einem Auslaßteil (6) von wenigstens annähernd kreisförmigem Querschnitt und mit einem im Leitungsverlauf angeordneten Unlenkteil (1) von wenigstens annähernd 90° oder mehr,
**dadurch gekennzeichnet ,** daß
das Umlenkteil (1) mit wenigstens einer Leitschaufel (2) versehen ist, die im Strömungsweg liegt und deren Krümmung wenigstens annähernd der Richtungsänderung des Umlenkteiles (1) angepaßt ist, und daß das Umlenkteil (1) eine von der Kreisform abweichende Querschnittsform derart aufweist, daß das Umlenkteil (1) im Bereich des größten Luftdurchsatzes aufgeweitet und zweiteilig ausgebildet ist, mit einem seitlich offenen Gehäuseteil (3) und mit einem die seitliche öffnung verschließenden Deckel (4).

2. Ansaugluftleitung nach Anspruch 1,
**dadurch gekennzeichnet ,** daß
an das Gehäuseteil (3) das Einlaßteil (5) und das Auslaßteil (6) angeformt sind.

3. Ansaugluftleitung nach Anspruch 1 oder 2,
**dadurch gekennzeichnet ,** daß
zwei oder mehr Leitschaufeln (2) in Stromlinienform vorgesehen sind, die kontinuierlich in Strömungsrichtung abnehmen.

4. Ansaugluftleitung nach Anspruch 1, 2 oder 3,
**dadurch gekennzeichnet ,** daß
die Leitschaufeln (2) an das Gehäuseteil (3) angeformt oder angespritzt sind.

5. Ansaugluftleitung nach Anspruch 4,
**dadurch gekennzeichnet ,** daß
die Leitschaufeln (2) in Nuten (17) des Deckels (4) abgestützt sind, die der Dicke der Profilform der Leitschaufeln (2) angepaßt sind.

## Claims

1. An intake air manifold for an internal combustion engine, with an inlet part (5) and an outlet part (6) of at least approximately circular cross-section and with, disposed in the run of the manifold, a diverting part (1) of at least approximately 90°, characterised in that the diverting part (1) is provided with at lest one guide blade (2) which lies in the flow path and the curvature of which is at least adapted to approximately the variation in direction of the diverting part (1), and in that the diverting part (1) has a cross-sectional form which deviates from the circular in such a way that the diverting part (1) is widened out and is of two-part construction in the region of the greatest throughput of air, comprising a laterally open housing part (1) and a cover (4) which seals the lateral aperture.

2. An intake air manifold according to claim 1, characterised in that the inlet part (5) and the outlet part (6) are integrally formed on the housing part (3).

3. An intake air manifold according to claim 1 or 2, characterised in that two or more guide blades (2) are provided in a streamlined form diminishing steadily in the direction of flow.

4. An intake air manifold according to claim 1, 2 or 3, characterised in that the guide blades (2) are integrally formed or integrally moulded onto the housing part (3).

5. An intake air manifold according to claim 4, characterised in that the guide blades (2) are supported in grooves (17) in the cover (4), said grooves being adapted to the thickness of the profile form of the guide blades (2).

## Revendications

1. Pipe d'admission d'air pour moteur à combustion interne, comprenant une partie d'entrée (5) et une partie de sortie (6) de section au moins approximativement circulaire, ainsi qu'une partie (1) de déviation d'au moins environ 90° ou plus, qui est disposée dans le tracé de la pipe,
caractérisée en ce que la partie de déviation (1) est munie d'au moins une pale directrice (2) qui est située sur le trajet de la circulation et dont la courbure est adaptée au moins approximativement au changement de direction de la partie de déviation (1) et en ce que la partie de déviation (1) présente une forme en coupe transversale qui diffère d'une forme circulaire de manière que la partie de déviation (1) s'élargisse dans la zone du débit maximal d'air et qu'elle soit réalisée en deux parties comprenant une partie d'enveloppe (3) ouverte latéralement et un couvercle (4) obturant l'ouverture latérale.

2. Pipe d'admission d'air selon la revendication 1,
caractérisée en ce que la partie d'entrée (5) et la partie de sortie (6) sont venues de moulage avec la partie d'enveloppe (3).

3. Pipe d'admission d'air selon la revendication 1 ou 2,
caractérisée en ce que sont prévues deux pales directrices (2) ou plus, de forme aérodynamique, qui s'amenuisent en continu dans le sens de la circulation.

4. Pipe d'admission d'air selon la revendication 1, 2 ou 3,
caractérisée en ce que les pales directrices (2) sont venues de moulage ou d'injection avec la partie d'enveloppe (3).

5. Pipe d'admission d'air selon la revendication 4,
caractérisée en ce que les pales directrices (2) prennent appui dans des rainures (17) du couvercle (4) qui sont adaptées à l'épaisseur de la forme du profil des pales directrices (2).
